# EUROPEAN PATENT SPECIFICATION

(11) **EP 3 756 441 B1**
(45) Date of publication and mention of the grant of the patent: **01.02.2023**
(21) Application number: 19182147.9
(22) Date of filing: 25.06.2019
(51) Int. Cl.: A01D 43/08

(54) **ADJUSTABLE CUTTER HEAD WEAR PLATE FOR A FORAGE HARVESTER**
EINSTELLBARE SCHNEIDVORSATZVERSCHLESSPLATTE FÜR EINEN FELDHÄCKSLER
PLAQUE D'USURE DE TÊTE DE COUPE RÉGLABLE POUR UNE RÉCOLTEUSE-HACHEUSE

(43) Date of publication of application: 30.12.2020
(73) Proprietor: CNH Industrial Belgium N.V., 8210 Zedelgem (BE)
(72) Inventor: Van Steenbrugge, Bart, 9790 Wortegem-Petegem (BE)
(74) Representative: CNH Industrial IP Department

(56) References cited:
- EP-A1- 0 787 426
- DE-A1- 19 532 669
- US-A1- 2008 234 020

## Description

### BACKGROUND OF THE INVENTION

The present invention relates to automatically adjusting the cutter head wear plate of a cutter head wear plate assembly for use with a forage harvester.

Forage harvesters are machines that chop crop gathered from a field into small pieces to produce animal feed. In the case of mainly leaf type crops such as grass or alfalfa, these will have been pre-cut and left to dry in the sun, so that the crop only needs to be gathered by the harvester. With other crops, such as corn, the forage harvester may also be equipped with a header, which cuts the standing crop. The crop, whether cut corn or gathered grass, is fed into a cutter, e.g., a rotating knife drum, which comminutes the product.

The chopped material is thrown by the cutter, via a transition channel, into a crop processor, which processes (i.e., cracks) the kernels and transfers the processed crop material with sufficient speed into a blower or accelerator, which propels it up a tower to a discharge spout through which it is discharged into a wagon or a trailer, either pulled by the harvester or drawn by a separate vehicle driven alongside or behind the harvester. If the chopped material is grass, the crop processor is typically removed from the crop processing stream, and the chopped material is thrown by the cutter, via the transition channel, directly into the blower or accelerator.

Cutters are typically equipped with wear plates located below the rotating knife drums that provide wear-resistance surfaces against which the rotating knifes can cut the incoming crop material.

However, a problem with a conventional cutter is that the wear plate is rotatablyfixed with respect to a center of the rotating knife drum, resulting in less than optimal crop flow efficiency and undue wear on components of the crop processing assembly located downstream of the cutter. The German patent application published as DE 195 32 669 A1 discloses a forage harvester comprising an adjustable guide plate that can be controlled to adjust the crop flow direction in the transition channel. This adjustable guide plate is positioned downstream of the wear plate.

What is needed in the art is a system that improves the efficiency of flow through crop processing assemblies, as well as reducing the amount of wear on components of the crop processing assemblies.

### SUMMARY OF THE INVENTION

The present invention provides an adjustable cutter head wear plate system for a harvesting vehicle that gathers crops, such as a forage harvester.

In accordance with an aspect of the present invention, a crop processing system for a harvesting vehicle including a cutter head drum mounted to a cutter head frame, the cutter head drum including a center and a periphery, a blower, a transition channel positioned between the cutter head drum and the blower, wherein the cutter head drum is configured to receive the gathered crop material, cut the received crop material, and project the cut crop material into the transition channel for reception by the blower, and an adjustable cutter head wear plate system. The adjustable cutter head wear plate system including a cutter head wear plate assembly positioned below the cutter head drum. The cutter head wear plate assembly includes a cutter head wear plate configured to be rotatable along the periphery of the cutter head drum, and a controller configured to: determine a current position of the cutter head wear plate along the periphery of the cutter head drum, and actuate a rotation of the cutter head wear plate to a pre-determined position.

According to another aspect of the present invention, the cutter head drum includes a plurality of blades having a plurality of distal ends, and wherein the trajectory of the plurality of distal ends defines the periphery.

According to another aspect of the present invention, the cutter head wear plate assembly includes one or more spacers, the one or more spacers used for adjusting a distance between the periphery of the cutter head drum and the cutter head wear plate.

According to another aspect of the present invention, the cutter head wear plate assembly includes a wear plate frame having a plurality of bearings, a curved trajectory surface on which the wear plate frame is configured to roll via the plurality of bearings, and a cylinder piston mounted to the cutter head frame and connected to the wear plate frame, wherein the cutter head wear plate is positioned adjacent to the periphery of the cutter head drum, and wherein the controller is configured to actuate the cylinder piston for rolling the wear plate frame on the curved trajectory surface via the plurality of bearings.

According to another aspect of the present invention, the controller is configured to actuate the cylinder piston for rotating the cutter head wear plate of the cutter head wear plate assembly about the center of the cutter head drum.

According to another aspect of the present invention, the cutter head wear plate is positioned at a radial distance from the center of the cutter head drum, and wherein the radial distance is adjustable via one or more spacers placed below the curved trajectory surface for adjusting the distance between the periphery of the cutter head drum and the cutter head wear plate.

According to another aspect of the present invention, the controller is configured to determine the current position of the cutter head wear plate along the periphery of the cutter head drum based on at least one of: a chopper body angle signal, a crop-type signal, a drum configuration signal, an engine load signal, a transition channel pressure signal, a transition channel image signal, a crop yield signal, and a cutter head wear plate position sensor.

According to another aspect of the present invention, the harvesting vehicle includes a reel housing including a header reel, and wherein the system further comprises a crop processing body housing the cutter head drum and a chopper body angle sensor mounted to the crop processing body and communicatively coupled to the controller, the chopper body angle sensor is configured to generate the chopper body angle signal based on an angle formed between a first line stationary to the crop processing body and a second line along a surface of ground in a longitudinal direction of the harvesting vehicle.

According to another aspect of the present invention, the adjustable cutter head wear plate system further includes an input/output device communicatively coupled to the controller, and wherein the input/output device is configured to receive an operator input representing a type of crop being harvested, and wherein the controller is configured to generate the crop-type signal based at least upon the operator input.

According to another aspect of the present invention, the engine load signal represents a torque being produced by an engine of the harvesting vehicle.

According to another aspect of the present invention, the transition channel includes a door, and wherein the system further includes a hydraulic pressure sensor assembly mounted to the cutter head frame and the door, the hydraulic pressure sensor assembly configured to generate the transition channel pressure signal based on pressure on the door from the cut crop material flowing through the transition channel.

According to another aspect of the present invention, the adjustable cutter head wear plate system further includes one or more image sensors mounted to the transition channel and communicatively coupled to the controller, wherein the one or more image sensors are configured to capture a plurality of images of the cut crop material in the transition channel, and wherein the controller is further configured to execute image processing software for processing the plurality of images and generating the transition channel image signal.

According to another aspect of the present invention, the harvesting vehicle includes at least one compression roller adjacent to an opening through which the cutter head drum receives the gathered crop material, and wherein the system further includes a crop yield sensor mounted to the compression roller and communicatively coupled to the controller, the crop yield sensor configured to generate the crop yield signal based upon the vertical displacement of the compression roller.

According to another aspect of the present invention, the pre-determined position results in the cut crop material being projected, by the cutter head drum, to a same portion of the transition channel.

According to another aspect of the present invention, the adjustable cutter head wear plate system comprises a wear plate position sensor configured to provide to the controller a wear plate position signal indicative of the current position of the cutter head wear plate.

In accordance with an aspect of the present invention, a harvesting vehicle includes the adjustable cutter head wear plate system according to one or more aspects as described above, and the harvesting vehicle is a forage harvester.

An advantage of the present invention is that the adjustable cutter head wear plate system minimizes wear to the transition channel by rotating the wear plate of the cutter head wear plate assembly about a center of the cutter head drum for changing the trajectory of the cut crop material in the transition channel.

Another advantage of the present invention is that the adjustable cutter head wear plate system optimizes the efficiency of the flow of the cut crop material through the transition channel by rotating the wear plate of the cutter head wear plate assembly about a center of the cutter head drum for changing the trajectory of the cut crop material in the transition channel.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a perspective view of a forage harvester having an adjustable cutter head wear plate system, according to an embodiment of the present invention;
Fig. 2 is an illustration of the adjustable cutter head wear plate system of Fig. 1, according to an embodiment of the present invention;
Fig. 3 is an illustration of the variability of the chopper body angle of the forage harvester of Fig. 1, according to an embodiment of the present invention; and
Fig. 4 illustrates a method for projecting a cut crop material, by the adjustable cutter head wear plate system of Fig. 2, according to an ideal or desired crop trajectory curve, in accordance with an embodiment of the present invention.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

The terms "fore", "aft", "left" and "right", when used in connection with the vehicle and/or components thereof are usually determined with reference to the direction of forward operative travel of the vehicle, but they should not be construed as limiting. The terms "longitudinal" and "transverse" are determined with reference to the fore-and-aft direction of the vehicle and are equally not to be construed as limiting. The terms "above" and "below" when used in connection with the vehicle and/or components thereof are usually determined with reference to positions along a vertical transverse direction (i.e., a direction that is approximately perpendicular to the ground), but they should not be construed as limiting. For example, a component positioned "below" another component may be closer to the ground than the other component.

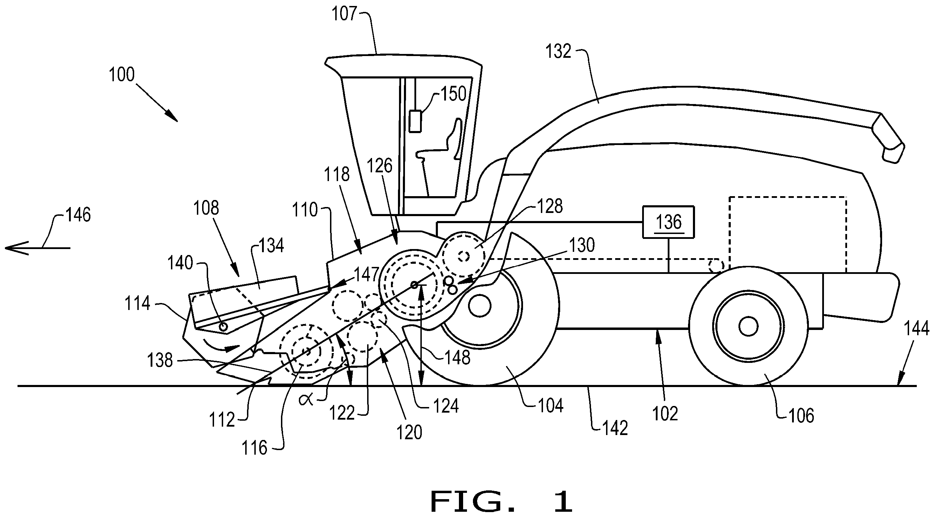

Referring now to the drawings, and more particularly to Fig. 1, there is shown an exemplary embodiment of a harvesting vehicle 100 in the form of a forage harvester 100, according to an embodiment of the present invention. The forage harvester 100 includes a main frame 102 supported on front and rear pairs of tires 104 and 106, of which only one of each pair is shown, and a cab 107 mounted to the main frame 102. The forage harvester 100 is shown equipped with a header 108 mounted to the front end of a crop processing body 110. The crop processing body 110 is pivotably attached to the main frame 102, typically by left and right struts (not shown) extending forwardly below the cab 107 and comprising a bearing for a shaft extending from the sides of the crop processing body 110. Left and right piston cylinders extend between the main frame 102 and the body 110 to pivot the latter and vary the height and orientation of the header 108 that is mounted to its front end.

The header 108 is selected to harvest, i.e. to cut and collect, a crop from the field as the forage harvester 100 moves in a fore direction. The harvested crop (i.e., the crop material) is chopped and processed into small pieces for storage in a silo and eventually for feeding to animals.

In one exemplary embodiment, the header 108 includes a cutter bar 112 for severing crops from a field during forward motion of the harvester 100. A rotatable header reel 114 feeds the severed crop to a conveying device 116, such as a transverse auger 116, which further feeds the crop laterally inwardly from each side toward a crop processing assembly 118 housed in the crop processing body 110. The scope of the present invention covers other types of headers 108, such as a header in the form of a row crop attachment, suitable for the harvesting of corn, a windrow pick-up device, or a conventional cutter bar attachment, depending on the type of crop to be harvested.

The crop processing assembly 118 includes a roller assembly 120 for receiving the harvested crop from the header 108. Typically, the roller assembly 120 includes two sets of rollers, for example, intake rollers 122 and compression rollers 124. However, the roller assembly 120 may include only one set of rollers (not shown).

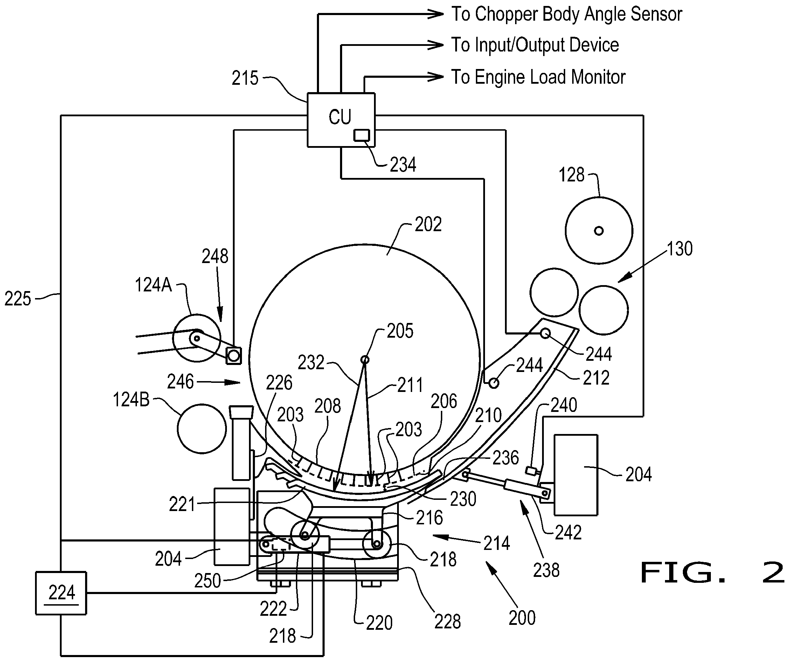

The crop processing assembly 118 also includes a cutter head assembly 126 having a transverse rotating cylinder 202 (Fig. 2) (i.e., a cutter head drum) provided with a plurality of radially extending knives 203 (Fig. 2). Crop material is chopped into forage by the rotating knives 203 of the cutter head drum 202 and delivered rearwardly by the cutter head assembly 126 to a blower 128 via an optional crop processing (CP) unit 130. The optional CP unit 130 is used to crack kernels of the crop being harvested, such as corn, so that livestock can more efficiently digested it. However, the CP unit 130 may be removed (or at least taken out of the crop processing stream) when the cracking operation is not needed, for example when the harvested or collected crop material is grass.

The blower 128 accelerates the chopped or chopped and cracked crop material into a rearwardly extending discharge conduit or spout 132 for discharge of the processed crop material into a trailer or container being pulled by a tractor or other agricultural vehicle typically located behind or to one side of the harvesting vehicle 100. The spout 132 can be positioned by an operator to direct the processed crop material as required, normally into the trailer or wagon moving along with the harvesting vehicle 100.

Fig. 2 illustrates an adjustable cutter head wear plate system 200 for a harvesting vehicle 100 that gathers crop material, according to an embodiment of the present invention. The adjustable cutter head wear plate system 200 includes the cutter head drum 202 mounted to a cutter head frame 204. In one embodiment, the cutter head frame 204 is housed within, and mounted to, the crop processing body 110, however in another embodiment, the cutter head frame 204 is a portion of the crop processing body 110. The cutter head drum 202 includes the plurality of radially extending knives 203, also referred to as blades, a center 205, and a periphery 206. Each blade 203 of the plurality of blades 203 has a proximal end 208 and a distal end 210. Each blade 203 is connected to the cutter head drum 202 at its proximal end 208. In one embodiment of the present invention, the periphery 206 of the cutter head drum 202 is formed by an approximately circular lotus of points passing through the distal ends 210 of the plurality of blades 203. Since the blades 203 typically wear down over repeated use, and thus become shorter in length, the position of outer edge 206 of the cutter head drum 202 with respect to the center 205 of the cutter head drum 202, or in other words, a radius 211 of the cutter head drum 202, becomes shorter over time. A transition channel 212 is positioned between the cutter head drum 202 and the blower 128. In operation, the cutter head drum 202 is configured to receive gathered crop material, cut the received crop material, and eject (or project) the cut crop material into the transition channel 212 for reception by either the CP unit 130 and the blower 128, or by only the blower 128 when the CP unit 130 is taken out of the crop processing stream.

Typically, the center 205 of the cutter head drum 202 coincides with the axis about which the crop processing body 110 is pivoted to adjust the height and angle of the header 108.

The adjustable cutter head wear plate system 200 further includes a cutter head wear plate assembly 214 positioned below the cutter head drum 202, and a control unit 215 (also referred to as a controller) located in the cab 107. Some of the components of the cutter head wear plate assembly 214 are configured to be rotatable along the periphery 206 of the cutter head drum 202, as will be discussed more fully below.

In one embodiment of the present invention, the cutter head wear plate assembly 214 includes a wear plate frame 216 having a plurality of bearings 218, a curved plate 220 on which the wear plate frame 216 is configured to roll via the plurality of bearings 218, a cutter head wear plate 221 mounted to the wear plate frame 216, and a cylinder piston 222 mounted to the cutter head frame 204 and connected to the wear plate frame 216 of the cutter head wear plate assembly 214. As illustrated, the wear plate 221 is positioned adjacent to the periphery 206 of the cutter head drum 202. The cylinder piston 222 may comprise an electric or a hydraulic cylinder piston. The adjustable cutter head wear plate system 200 may further include a wear plate position sensor 250 that is configured to provide to the controller 215 a wear plate position signal indicative of the current position of the cutter head wear plate 221. The wear plate position sensor 250 can be attached to the cutter head wear plate 221 or on the cylinder piston 222. For example, the wear plate position sensor 250 can be integral with the cylinder piston 222 in order to provide the current position of the cylinder piston 222, and thereby the current position of the cutter head wear plate 221, to the controller 215. The wear plate position sensor 250 can be in the form of any desired sensor, such as a position sensor or a potentiometer.

The controller 215 is configured to determine a position of the wear plate 221 along the periphery 206 of the cutter head drum 202 and actuate the cylinder piston 222 for moving the wear plate frame 216 along the curved plate 220 via the bearings 218 to rotate (i.e., adjust) the wear plate 221 of the cutter head wear plate assembly 214 about the center 205 of the cutter head drum 202 to a determined position. As used herein, the determined position may refer to an initial position or a subsequent fine tuned position. The controller 215 may monitor the current position signal from the sensor 250 and use it in a feedback loop to verify whether the determined position of wear plate 221 has already been reached and to actuate the cylinder piston 222 accordingly. In one embodiment of the present invention, the controller 215 actuates the cylinder piston 222, in the form of an electric or hydraulic cylinder piston by sending a control signal to a hydraulic valve 224 via a control line 225. This cylinder piston is foreseen from a cutter head wear plate position sensor 250 that communicates the position of the cutterhead wear plate assembly 214 to the controller 215. The hydraulic valve 224 is coupled to the cylinder piston 222 via a hydraulic line 226.

In another embodiment, the cutter head wear plate assembly 214 includes one or more spacers 228 for adjusting a distance 230 between the periphery 206 of the cutter head drum 202 and the wear plate 221 (i.e., for adjusting a radial distance 232 measured from the center 205 of the cutter head drum 202 to the wear plate 221). For example, by adding more spacers 228 to the cutter head wear plate assembly 214, the distance 230 decreases, thereby enabling an operator to keep the distance 230 constant as the knives 203 become shorter over time, or to adjust the distance 230 for different crop material and/or conditions, such as crop moisture content, for example.

In one embodiment of the invention, the controller 215 is configured to determine the position of the wear plate 221 along the periphery 206 of the cutter head drum 202 based on one or more of the following inputs: drum configuration, chopper body angle signals, crop-type signals, harvesting vehicle engine load signals, transition channel pressure signals, transition channel image signals, crop yield signals, and cutter head wear plate position signals.

In one embodiment, the wear plate 221 is rotated (or adjusted) about the center 205 of the cutter head drum 202 to the determined position for projecting the cut crop material into the transition channel 212 according to an ideal crop flow trajectory. Conventional wear plates are non-adjustable (e.g., rotationally fixed) in relation to the periphery of cutter head drums, and thus convention crop flow trajectories, which may be defined by projection angles of the cut crop material into the transition channel and/or those portions of the transition channel to which the crop is projected, are dependent upon crop types, crop conditions, engine loads, cutter head drum configuration etc.

For example, a conventional wear plate will project a heavy wet crop at a low projection angle to a lower portion (also referred to as a forward portion or fore portion) of the transition channel, leading to an increased rate of wear on the lower portion of the channel and a decreased efficiency of a cutter head assembly moving the cut crop material through the transition channel, which may even lead to the cut crop material blocking the transition channel. The present invention addresses this problem by enabling an automatic adjustment (e.g., an automatic rotation) of the wear plate 221 about the center 205 of the cutter head drum 202 such that the wear plate 221 is positioned further aft along the periphery 206 of the cutter head drum 202 (i.e., the wear plate 221 is positioned closer to the transition channel) for projecting the cut crop material at a higher projection angle to a projected position higher in the transition channel (i.e., to a higher or more aft portion of the channel).

In addition, a conventional wear plate will project a light, dry crop at a high projection angle to a higher portion (i.e., a more aft portion) of the transition channel, leading to a decreased efficiency of a cutter head assembly moving the cut crop material through the transition channel. The present invention addresses this problem by enabling an automatic adjustment (e.g., an automatic rotation) of the wear plate 221 about the center 205 of the cutter head drum 202 such that the wear plate 221 is positioned further fore along the periphery 206 of the cutter head drum 202 (i.e., the wear plate 221 is positioned farther from the transition channel) for projecting the cut crop material at a lower projection angle to a projected position lower in the transition channel (i.e., to a lower or more fore portion of the channel).

In other words, the circumferentially-adjustable wear plate 221 of the present invention changes the location at which the cut crop material is released out of the cutter head drum 202, thereby maintaining a pre-defined ideal crop flow trajectory as determined by projection angle and/or portion of the transition channel 212 to which the cut crop material is projected, based on a consideration of a number of factors, such as crop type being harvested, crop conditions, and/or operating parameters of the harvesting vehicle 100, as discussed in more detail further below.

Referring to Fig. 1, the harvesting vehicle 100 may be equipped with a cutter bar attachment including a reel housing 134 to which the header reel 114 is mounted. A chopper body angle sensor 136 may be connected between the crop processing body housing 110 and main frame 102 and communicatively coupled to the controller 215. The chopper body angle sensor 136 is configured to generate a chopper body angle signal representative of a chopper body angle α formed between a first line 138 passing forwardly and downwardly through the center 205 (Fig. 2) of the cutter head drum 202 (Fig. 2) and being stationary to the crop processing body 110 and a second line 142 along a surface of ground 144 in a longitudinal direction 146 of the harvesting vehicle 100. For instance, the first line 138 may be the line passing through the center 205 of the cutter head drum 202 and the center of the header auger 116. The chopper body angle sensor 136 may be in the form of a spring or a piston in a cylinder coupled with corresponding electronics (e.g., switches, resistors, power source, etc.), and configured to generate a chopper body angle signal, a magnitude of which depends upon how far the spring is compressed or how far the piston is compressed in the cylinder. Alternatively, the sensor 136 may comprise a potentiometer having an arm that is rotated by the pivotal movement of the crop processing body 110. The reel housing 134 may be rotatably attached, by a hinge 147, for example, to the crop processing body 110. Thereby, it may be possible for the reel 114 to be positioned on the ground surface 144 independent of a height 148 of the cutter head assembly 126 above the ground surface 144.

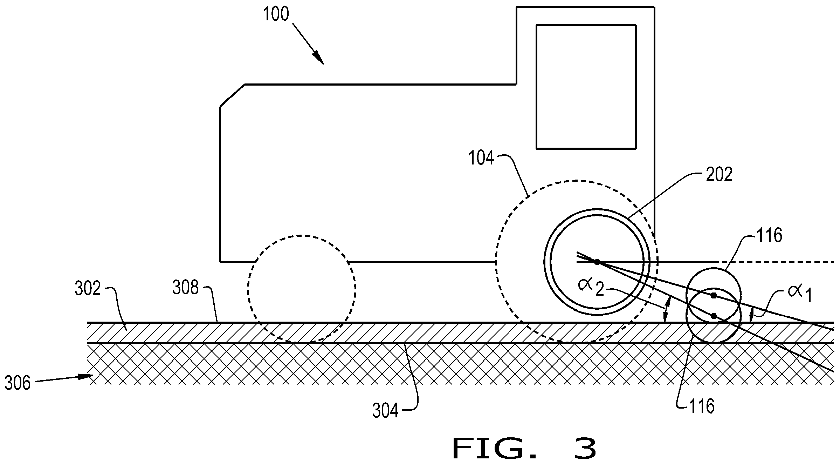

Fig. 3 illustrates the variability of the chopper body angle α of the harvesting vehicle 100, according to an embodiment of the present invention. For example, when harvesting in wet soil conditions, the harvesting vehicle 100 may sink through the wet soil 302 until resting on a surface 304 of the underlying harder soil 306, however, the bottom of the header 108 rests on a surface 308 of the wet soil, resulting in a chopper body angle α₁. If the harvesting vehicle 100 sinks even further into the hard soil 306, the chopper body angle α₁ becomes smaller. However, when harvesting in dry soil conditions, both the harvesting vehicle 100 and the header 108 rest on the same surface, for example, the surface 304, resulting in a chopper body angle α₂, where α₂ ≥ α₁. The chopper body angle also depends upon the size of the tires 104. As an outside diameter of the tires 104 of the harvesting vehicle 100 become larger, the chopper body angle also becomes larger. However, if the harvesting vehicle 100 is equipped with a tire inflation (TIF) system, reducing the pressure of the tires 104 results in a reduction in the chopper body angle.

In one embodiment of the invention, as the chopper body angle α decreases, the controller 215 generates a first control signal, based on the received chopper body angle signal, causing the wear plate 221 to be rotated (i.e., adjusted) in a rear direction about the center 205 of the cutter head drum 202 (i.e., away from the transition channel 212) in order to project the cut crop material into the transition channel 212 according to the ideal crop flow trajectory.

Referring to Fig. 1, and in another embodiment of the present invention, the adjustable cutter head wear plate system 200 includes an input/output device 150 mounted to the cab 107, and communicatively coupled to the controller 215. The input/output device 150 is configured to receive input data from an operator, such as input representing a type of crop being harvested, such as corn, grass, hay, etc. The controller 215 may have a memory 234 (Fig. 2) for storing different types of crops, and the controller 215 may compare the input data with the data stored in the memory 234 to generate a crop-type signal. For example, different types of crops have different weights per unit volume after being cut, and may also have different inherent moisture contents, and thus the position of the wear plate 221 about the center 205 of the cutter head drum 202 may be based on the type of crop being harvested. In one embodiment, the controller 215 generates a second control signal, based on the received crop-type signal, causing the wear plate 221 to be rotated for projecting the cut crop material into the transition channel 212 according to the ideal crop flow trajectory.

The input/output device can also be configured to receive input data relating to the cutter head drum configuration. For example, the operator may change the quantity and distribution of the blades 203 on the cutter head drum 202, thereby varying the length of the cut crop material and the consequent trajectory of this material through the harvesting vehicle 100. The operator may input drum configuration codes for storage into the memory 234 and later use by the controller 215 for adjusting the position of the wear plate 221.

The harvesting vehicle 100 includes an engine (not shown), and typically includes instrumentation for monitoring an engine load signal (e.g., a signal representing the torque being produced by the engine). In a further embodiment of the present invention, the controller 215 receives an engine load signal from a conventional engine load monitor (not shown), and generates a third control signal for adjusting the position of the wear plate 221. For example, if the engine is producing a small amount of torque, the controller 215 may adjust the position of the wear plate 221 to be further aft (i.e., to be closer to the transition channel) for projecting the cut crop material into the transition channel 212 according to the ideal crop flow trajectory.

Referring to Fig. 2, the transition channel 212 may include a door 236. For example, the door 236 may be hinged to the transition channel 212, e.g., to an aft or lower portion of the transition channel 212, for accessing the transition channel 212 for repair or cleaning. In one embodiment of the invention, the adjustable cutter head wear plate system 200 further includes a hydraulic pressure sensor assembly 238 mounted to the cutter head frame 204 and the door 236. The hydraulic pressure sensor assembly 238 may include an electronic (e.g., digital) pressure gauge 240 coupled to a hydraulic cylinder 242. The assembly 238 may be configured to generate a transition channel pressure signal based on a pressure exerted on the door 236 from the cut crop material flowing through the transition channel 212. The controller 215 may be configured to generate a fourth control signal upon reception of the transition channel pressure signal, causing the wear plate 221 to be rotated for projecting the cut crop material into the transition channel 212 according to the ideal crop flow trajectory. For example, and in an exemplary embodiment, when the transition channel pressure signal indicates a high pressure, for example, a pressure greater than a predefined pressure threshold, the controller 215 operates to position the wear plate 221 to be further aft, thereby projecting the cut crop material to a position in the transition channel that is further aft, and thereby alleviating any excess pressure in the lower portion (i.e., the fore portion) of the transition channel 212, thereby preventing undue wear of the transition channel 212 and projecting the cut crop material into the transition channel 212 according to the ideal crop flow trajectory.

Referring to Fig. 2, and in another embodiment of the invention, the adjustable cutter head wear plate system 200 includes one or more image sensors 244 communicatively coupled to the controller 215 and mounted to the transition channel 212 for capturing images of the cut crop material in the transition channel 212. The image sensors 244 may be high-speed digital cameras. In operation, the controller 215 is configured to execute image processing software, stored in the memory 234, for example, for processing the received images and generating transition channel image signals. The image signals may represent, for example, a density or an amount of the cut crop material at different positions within the transition channel 212, and the controller 215 may be configured to generate a fifth control signal based on the image signals for positioning the wear plate 221 such that crop projection (also referred to as crop trajectory) within the transition channel 212 approaches the ideal crop flow trajectory.

Referring again to Fig. 2, the harvesting vehicle 100 may include at least one movable compression roller (e.g., compression roller 124A) adjacent to an opening 246 through which the cutter head drum 202 receives the gathered crop material. In one embodiment, the adjustable cutter head wear plate system 200 further includes a crop yield sensor 248 affixed to the crop processing body 110 and having an arm rotatably mounted to the compression roller 124A and configured such that crop material flowing into the opening 246 to the cutter head drum 202 impacts and lifts the movable roller 124A and rotates the crop yield sensor 248. The amount of rotation of the crop yield sensor 248 is dependent upon crop yield. In one embodiment, crop yield can be measured as an amount of crop material that flows into the cutter head drum opening 246 per unit of time, which depends, for example, on a flow rate of the crop material through the opening 246 and a density of the crop material. Higher crop yield may result in a larger angle of rotation of the crop yield sensor 248. In one embodiment, the crop yield sensor 248 has electrical components and/or circuitry that generate a crop yield signal, the magnitude of which is based upon the amount of rotation of the sensor 248 by the lifting of the compression roller 124A. The controller 215 may use the crop yield signal for generating a sixth control signal for positioning the wear plate 221 such that crop projection within the transition channel 212 approaches the crop flow trajectory. For example, a higher measured crop yield may result in the cut crop material being projected too low (too far upstream) in the transition channel 212, and thus the controller 215 generates a sixth control signal that results in the wear plate 221 being moved in the aft direction (i.e. towards the transition channel 212) to generate a crop projection into the channel 212 that approaches the projection represented by the ideal crop flow trajectory, for example.

The controller 215 is configured to determine the position of the wear plate 221 based on one or more of the above-described sensor signals and operator input, singly or in combination with each other, that will result in the cut crop material being projected according to an ideal crop flow trajectory. Once the controller 215 has determined the position of the wear plate 221, the controller 215 generates a control signal, and sends the control signal to an actuator of the cylinder piston 222 for causing the cylinder piston 222 to rotate (or move) the wear plate 221 to the determined position. The actuator may be, for example, the hydraulic valve 224, or in another embodiment, may be an electric motor. In another embodiment, the control signal may be a combination of one or more of the first, second, third, fourth, fifth and sixth control signals.

In yet another embodiment, the controller 215 is configured to determine the position of the wear plate 221 based on one or more of the above-described sensor signals and operator input, singly or in combination with each other, that result in the cut crop material being projected according to a desired crop flow trajectory. The desired crop flow trajectory is based on the operator defining either a projection angle and/or a projected portion of the transition channel to which the cut crop material will be projected upon exiting the cutter head drum 202. One or more of the parameters of the desired crop flow trajectory may be input by the operator via the input/output device 150 for reception by the controller 215.

An ideal crop flow trajectory may be dependent upon a variety of parameters of the cutter head wear plate system 200 and/or harvesting vehicle 100, such as dimensions of the transition channel 212 and cutter head drum 202 or the presence of a CP unit 130, for example. Thus, the present invention is not to be limited to any specific ideal crop flow trajectory, since the definition of ideal crop flow trajectories may depend upon the parameters of particular harvesting vehicles, including the components of the crop processing assembly 118 of the particular harvesting vehicles.

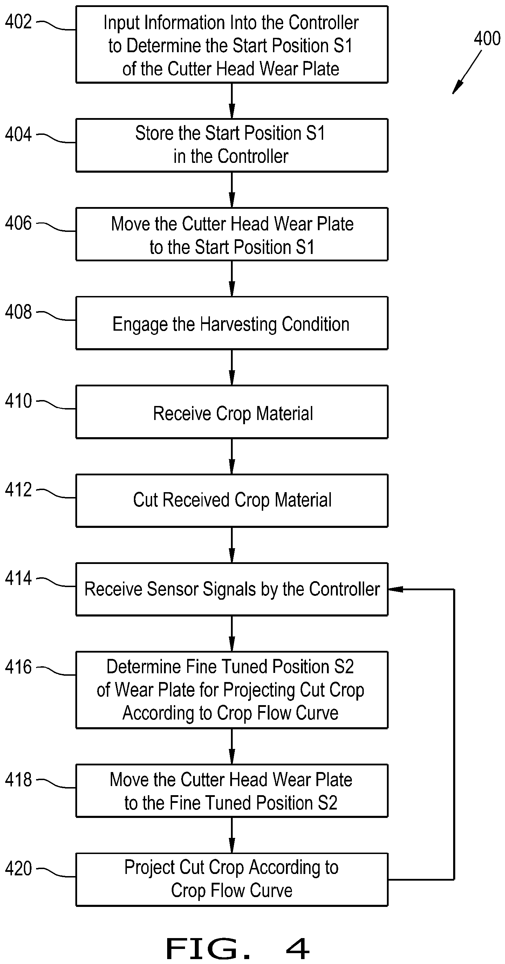

Fig. 4 illustrates a method 400 for projecting a cut crop material according to an ideal or desired crop flow trajectory, according to an embodiment of the present invention. The method 400 may include an initial step of setting an initial, start position S1 of the cutter head wear plate 221. In step 402, the information can be inputted into the controller 215 in order to determine the start position S 1 of the cutter head wear plate 221. The information inputted into the controller 215 may be configuration parameters such as a drum configuration, from the machine settings, a header type, CP presence, tire type, a calibration header height, a crop-type signal, which may be inputted by the operator, a chopper body angle signal, and/or a cutter head wear plate position sensor signal. In step 404, the controller 215 may store the start position S 1. The calibration header height can be the header height at which the ground position equals the copper body angle. In step 406, the controller 215 may move the cutter head wear plate 221 by actuating the cylinder 222 and rotating the cutter head wear plate 221 into the start position S 1. It should be appreciated that the method 400 may not include the steps for determining and setting the cutter head wear plate 221 in the initial start position S 1.

In step 408, the controller 215 can engage the harvesting condition. In more detail, with the cutter head wear plate 221 in the start position S1, the drum 202 and the header 108 can be engaged, and the agricultural vehicle 100 can be moved forward and brought to harvesting speed. Further, in steps 410 and 412, the cutter head drum 202 of the agricultural vehicle 100 receives crop material gathered by the agricultural vehicle 100, and the cutter head drum 202 cuts the received crop material. In the harvesting condition, the cutter head wear plate 221 can be adapted to the header type, tire combination, and the specific weight of the crop. In step 414, the controller 215 may receive the sensor signals from the various sensors. In this regard, the controller 215 may receive harvest parameters. For example, the controller 215 may receive a chopper body angle signal, a crop-type signal, an engine load signal, door pressure, a transition channel pressure signal, a transition channel image signal, a crop yield or flow signal, a crop humidity, and a cutter head wear plate position signal. It is also possible that the controller 215 may receive other information from various other sensors and/or information inputted by the operator in step 414. In step 416, the controller 215 may determine the fine tuned position S2 of the cutter head wear plate 221 for projecting the cut crop material according to an ideal or desired crop flow trajectory or crop flow curve. In more detail, the controller 215 may determine the fine tuned position S2, along a periphery 206 of the cutter head drum 202, based upon the analysis of the sensor signals, or other information, received in step 214. In step 418, the controller 215 may actuate the cylinder 222 to rotate the cutter head wear plate 221 to the determined, fine tuned position S2. In step 420, the cutter head drum 202 projects the cut crop material into the transition channel 212 according to the ideal or desired crop flow trajectory.

Further, the process of fine tuning the position of the cutter head wear plate 221 can be a looped function such that the process steps of receiving sensor signals, determining the fine tuned position S2, moving the cutter head wear plate 221 into fine tuned position S2, and projecting cut crop material according to the crop flow curve can be continually repeated during operation of the agricultural vehicle 100. For example, when the chopper body angle changes during harvesting the controller 215 will move the cutter head wear plate 221 to a new position S2. Thereby, the cutter head wear plate 221 will continually adapt itself to changing soil and field conditions. In sum, the cutter head wear plate 221 can be positioned in the first S1 position before the start of harvesting, the fine tuning of the cutter head wear plate 221 can take place during harvesting, and the subsequent adjustment of the cutter head wear plate 221 can continually occur as the harvest parameters vary during the harvesting operation. It should be appreciated that the course adjustment of changing the position from S 1 to S2 could occur before the start of harvesting.

While this invention has been described with respect to at least one embodiment, the present invention can be further modified within the scope of this disclosure as defined by the appended claims. This application is therefore intended to cover any variations, uses, or adaptations of the invention using its general principles and falling within this scope . Further, this application is intended to cover such departures from the present disclosure as come within known or customary practice in the art to which this invention pertains and that fall within the limits of the appended claims.

## Claims

1. A crop processing system for a harvesting vehicle (100) configured for gathering crop material, comprising:
a cutter head drum (202) mounted to a cutter head frame (204), the cutter head drum (202) having a center (205) and a periphery (206);
a blower (128);
a transition channel (212) positioned between the cutter head drum (202) and the blower (128), wherein the cutter head drum (202) is configured to receive the gathered crop material, cut the received crop material, and project the cut crop material into the transition channel (212) for reception by the blower (128); and
an adjustable cutter head wear plate system (200) comprising a cutter head wear plate assembly (214) positioned below the cutter head drum (202),
the cutter head wear plate assembly (214) including a cutter head wear plate (221) configured to be rotatable along the periphery (206) of the cutter head drum (202); **characterised by**
a controller (215) configured to:
determine a current position of the cutter head wear plate (221) along the periphery (206) of the cutter head drum (202), and
actuate a rotation of the cutter head wear plate (221) to a pre-determined position.

2. The crop processing system according to claim 1, wherein the cutter head drum (202) comprises a plurality of blades (203) having a plurality of distal ends (210), and wherein a trajectory of the plurality of distal ends (210) defines the periphery (206).

3. The crop processing system according to claim 2, wherein the cutter head wear plate assembly (214) comprises one or more spacers (228), the one or more spacers being used for adjusting a distance (230) between the periphery (206) of the cutter head drum (202) and the cutter head wear plate (221).

4. The crop processing system according to any one of claims 1-2, wherein the cutter head wear plate assembly (214) comprises a wear plate frame (216) having a plurality of bearings (218), a curved trajectory surface (220) on which the wear plate frame (216) is configured to roll via the plurality of bearings (218), and a cylinder piston (222) mounted to the cutter head frame (204) and connected to the wear plate frame (216), wherein the cutter head wear plate (221) is positioned adjacent to the periphery (206) of the cutter head drum (202), and wherein the controller (215) is configured to actuate the cylinder piston (222) for rolling the wear plate frame (216) on the curved trajectory surface (220) via the plurality of bearings (218).

5. The crop processing system according to claim 4, wherein the controller (215) is configured to actuate the cylinder piston (222) for rotating the cutter head wear plate (221) of the cutter head wear plate assembly (214) about the center (205) of the cutter head drum (202).

6. The crop processing system according to claim 5, wherein the cutter head wear plate (221) is positioned at a radial distance (232) from the center (205) of the cutter head drum (202), and wherein the radial distance (232) is adjustable via one or more spacers (228) placed below the curved trajectory surface (220) for adjusting the distance (230) between the periphery (206) of the cutter head drum (202) and the cutter head wear plate (221).

7. The crop processing system according to any preceding claims, wherein the controller (215) is configured to determine the current position of the cutter head wear plate (221) along the periphery (206) of the cutter head drum (202) based on at least one of: a chopper body angle signal, a crop-type signal, a drum configuration signal, an engine load signal, a transition channel pressure signal, a transition channel image signal, a crop yield signal, and a cutter head wear plate position sensor.

8. The crop processing system according to claim 7, wherein the harvesting vehicle (100) includes a reel housing (134) including a header reel (114), and wherein the system (200) further comprises a crop processing body (110) housing the cutter head drum (202) and a chopper body angle sensor (136) connected to the crop processing body (110) and communicatively coupled to the controller (215), the chopper body angle sensor (136) being configured to generate the chopper body angle signal based on an angle formed between a first line (138) stationary to the crop processing body (110) and a second line (142) along a surface of ground (144) in a longitudinal direction (146) of the harvesting vehicle (100).

9. The crop processing system according to claim 7, further comprising an input/output device (150) communicatively coupled to the controller (215), and wherein the input/output device (150) is configured to receive an operator input representing a type of crop being harvested, and wherein the controller (215) is configured to generate the crop-type signal based at least upon the operator input.

10. The crop processing system according to claim 7, wherein the engine load signal represents a torque being produced by an engine of the harvesting vehicle (100).

11. The crop processing system according to claim 7, wherein the transition channel (212) includes a door (236), and wherein the system (200) further includes a hydraulic pressure sensor assembly (238) mounted to the cutter head frame (204) and the door (236), the hydraulic pressure sensor assembly (238) configured to generate the transition channel pressure signal based on pressure on the door (236) from the cut crop material flowing through the transition channel (212).

12. The crop processing system according to claim 7, further comprising one or more image sensors (244) mounted to the transition channel (212) and communicatively coupled to the controller (215), wherein the one or more image sensors (244) are configured to capture a plurality of images of the cut crop material in the transition channel (212), and wherein the controller (215) is further configured to execute image processing software for processing the plurality of images and generating the transition channel image signal.

13. The crop processing system according to claim 7, further comprising at least one compression roller (124A) adjacent to an opening (246) through which the cutter head drum (202) receives the gathered crop material, and wherein the system (200) further includes a crop yield sensor (248) mounted to the compression roller (124A) and communicatively coupled to the controller (215), the crop yield sensor (248) configured to generate the crop yield signal based upon the vertical displacement of the compression roller.

14. The crop processing system according to any of the preceding claims, wherein the pre-determined position results in the cut crop material being projected, by the cutter head drum (202), to a same portion of the transition channel (212).

15. The crop processing system according to claim 1, wherein the adjustable cutter head wear plate system (200) comprises a wear plate position sensor configured to provide to the controller (215) a wear plate position signal (250) indicative of a current position of the cutter head wear plate (221).

## Patentansprüche

1. Erntegutverarbeitungssystem für ein Erntefahrzeug (100), das zur Aufnahme von Erntegut eingerichtet ist, mit:
einer Schneidvorsatztrommel (202), die an einem Schneidvorsatz-Rahmen (204) angebracht ist, wobei die Schneidvorsatztrommel (202) einen Mittelpunkt (205) und einen Umfang (206) aufweist;
einem Gebläse (128);
einem Übergangskanal (212), der zwischen der Schneidvorsatztrommel (202) und dem Gebläse (128) angeordnet ist, wobei die Schneidvorsatztrommel (202) dazu eingerichtet ist, das geraffte Erntegut aufzunehmen, das aufgenommene Erntegut zu schneiden, das Erntegut in den Übergangskanal (212) zur Aufnahme durch das Gebläse (128) zu schleudern; und
einem einstellbaren Schneidvorsatz-Verschleißplattensystem (200), das eine Schneidvorsatz-Verschleißplattenanordnung (214) aufweist, die unter der Schneidvorsatztrommel (202) angeordnet ist;
wobei die Schneidvorsatz-Verschleißplattenanordnung (214) eine Schneidvorsatz-Verschleißplatte (221) umfasst, die dazu eingerichtet ist, entlang des Umfangs (206) der Schneidvorsatztrommel (202) drehbar zu sein;
**dadurch gekennzeichnet, dass**
eine Steuereinrichtung (215) dazu eingerichtet ist:
eine aktuelle Stellung der Schneidvorsatz-Verschleißplatte (221) entlang des Umfangs (206) der Schneidvorsatztrommel (202) zu bestimmen, und
eine Drehung der Schneidvorsatz-Verschleißplatte (221) in eine vorbestimmte Stellung zu betätigen.

2. Erntegutverarbeitungssystem nach Anspruch 1, wobei die Schneidvorsatztrommel (202) eine Mehrzahl von Schneiden (203) aufweist, die eine Mehrzahl von distalen Enden (210) aufweisen, und wobei eine Bewegungsbahn der Mehrzahl von distalen Enden (210) den Umfang (206) definiert.

3. Erntegutverarbeitungssystem nach Anspruch 2, wobei die Schneidvorsatz-Verschleißplattenanordnung (214) ein oder mehrere Distanzstücke (228) aufweist, wobei das eine oder die mehreren Distanzstücke zur Einstellung eines Abstands (230) zwischen dem Umfang (206) der Schneidvorsatztrommel (202) und der Schneidvorsatz-Verschleißplatte (221) verwendet werden.

4. Erntegutverarbeitungssystem nach einem der Ansprüche 1 bis 2, wobei die Schneidvorsatz-Verschleißplattenanordnung (214) einen Verschleißplatten-Rahmen (216) mit einer Mehrzahl von Lagern (218), eine gekrümmte Bewegungsbahn-Oberfläche (220), auf welcher der Verschleißplatten-Rahmen (216) dazu eingerichtet ist, mittels der Mehrzahl von Lagern (218) zu rollen, und einen Zylinder-Kolben (222) aufweist, der an dem Schneidvorsatz-Rahmen (204) angebracht und der mit dem Verschleißplatten-Rahmen (216) verbunden ist, wobei die Schneidvorsatz-Verschleißplatte (221) angrenzend an den Umfang (206) der Schneidvorsatztrommel (202) angeordnet ist, und wobei die Steuereinrichtung (215) dazu eingerichtet ist, den Zylinder-Kolben (222) zum Rollen des Schneidplatten-Rahmens (216) auf der gekrümmten Bewegungsbahn-Oberfläche (220) mittels der Mehrzahl von Lagern (218) zu betätigen.

5. Erntegutverarbeitungssystem nach Anspruch 4, wobei die Steuereinrichtung (215) dazu eingerichtet ist, den Zylinder-Kolben (222) zur Drehung der Schneidvorsatz-Verschleißplatte (221) der Schneidvorsatz-Verschleißplattenanordnung (214) um den Mittelpunkt (205) der Schneidvorsatztrommel (202) zu betätigen.

6. Erntegutverarbeitungssystem nach Anspruch 5, wobei die Schneidvorsatz-Verschleißplatte (221) in einem radialen Abstand (232) von dem Mittelpunkt (205) der Schneidvorsatztrommel (202) angeordnet ist, und wobei der radiale Abstand (232) mittels eines oder mehrerer Distanzstücke (228) einstellbar ist, die unter der gekrümmten Bewegungsbahn-Oberfläche (220) zur Einstellung des Abstands (232) zwischen dem Umfang (206) der Schneidvorsatztrommel (202) und der Schneidvorsatz-Verschleißplatte (221) angeordnet sind.

7. Erntegutverarbeitungssystem nach einem der vorherigen Ansprüche, wobei die Steuereinrichtung (215) dazu eingerichtet ist, die aktuelle Stellung der Schneidvorsatz-Verschleißplatte (221) entlang des Umfangs (206) der Schneidvorsatztrommel (202) zu bestimmen, basierend auf mindestens einem Element aus: einem Häckslergehäuse-Winkelsignal, einem Erntegut-Sortensignal, einem Trommelstellungssignal, einem Motorlastsignal, einem Übergangskanal-Drucksignal, einem Übergangskanal-Bildsignal, einem Erntegut-Ertragssignal und einem Schneidvorsatz-Verschleißplattenstellungssensor.

8. Erntegutverarbeitungssystem nach Anspruch 7, wobei das Erntefahrzeug (100) ein Haspel-Gehäuse (134) aufweist, das eine Vorsatz-Haspel (114) aufweist, und wobei das System (200) des Weiteren ein Erntegut-Verarbeitungsgehäuse (110), das die Schneidvorsatztrommel (202) umhaust, und einen Häckslergehäuse-Winkelsensor (136) aufweist, der mit dem Erntegut-Verarbeitungsgehäuse (110) verbunden und mit der Steuereinrichtung (215) kommunikativ verbunden ist, wobei der Häckslergehäuse-Winkelsensor (136) dazu eingerichtet ist, das Häckslergehäuse-Winkelsignal basierend auf einem Winkel erzeugen, der zwischen einer ersten Linie (138), die stationär zu dem Erntegut-Verarbeitungsgehäuse (110) ist, und einer zweiten Linie (142) entlang einer Oberfläche eines Bodens (144) in einer Längsrichtung (146) des Erntegutfahrzeugs (100) gebildet wird.

9. Erntegutverarbeitungssystem nach Anspruch 7, das des Weiteren ein Eingabe-/Ausgabegerät (150) aufweist, das kommunikativ mit der Steuereinrichtung (215) verbunden ist, und wobei das Eingabe-/Ausgabegerät (150) dazu eingerichtet ist, eine Eingabe eines Benutzers zu empfangen, die kennzeichnend für eine Sorte von Erntegut ist, das geerntet wird, und wobei die Steuereinrichtung (215) dazu eingerichtet ist, das Erntegut-Sortensignal basierend auf mindestens einer Benutzereingabe zu erzeugen.

10. Erntegutverarbeitungssystem nach Anspruch 7, wobei das Motorlastsignal kennzeichnend für ein Drehmoment ist, das von einem Motor des Erntefahrzeugs (100) erzeugt wird.

11. Erntegutverarbeitungssystem nach Anspruch 7, wobei der Übergangskanal (212) eine Tür (236) umfasst, und wobei das System (200) des Weiteren eine Hydraulikdruck-Sensoranordnung (238) umfasst, die an dem Schneidvorsatz-Rahmen (204) und der Tür (236) befestigt ist, wobei die Hydraulikdruck-Sensoranordnung (238) dazu eingerichtet ist, das Übergangskanal-Drucksignal basierend auf einem Druck an der Tür (236) von dem Erntegut, das durch den Übergangskanal (212) fließt, zu erzeugen.

12. Erntegutverarbeitungssystem nach Anspruch 7, das des Weiteren einen oder mehrere Bildsensoren (244) aufweist, die an dem Übergangskanal (212) angebracht und die kommunikativ mit der Steuereinrichtung (215) verbunden sind, wobei der eine oder die mehreren Bildsensoren (244) dazu eingerichtet sind, eine Mehrzahl von Bildern des geschnittenen Ernteguts in dem Übergangskanal (212) zu erfassen, und wobei die Steuereinrichtung (215) des Weiteren dazu eingerichtet ist, eine Bildverarbeitungssoftware zur Verarbeitung der Mehrzahl von Bildern und eine Erzeugung des Übergangskanals-Bildsignals auszuführen.

13. Erntegutverarbeitungssystem nach Anspruch 7, das des Weiteren mindestens eine Kompressionswalze (124A) angrenzend an die Öffnung (246) aufweist, durch die die Schneidvorsatztrommel (202) das geraffte Erntegut empfängt, und wobei das System (200) des Weiteren einen Erntegut-Ertragssensor (248) umfasst, der an der Kompressionswalze (124A) angebracht und der kommunikativ mit der Steuereinrichtung (215) verbunden ist, wobei der Erntegut-Ertragssensor (248) dazu eingerichtet ist, das Erntegut-Ertragssignal basierend auf dem vertikalen Versatz der Kompressionswalze zu erzeugen.

14. Erntegutverarbeitungssystem nach einem der vorherigen Ansprüche, wobei die vorbestimmte Stellung dazu führt, dass das geschnittene Erntegut durch die Schneidvorsatztrommel (202) an einen gleichen Abschnitt des Übergangskanals (212) geschleudert wird.

15. Erntegutverarbeitungssystem nach Anspruch 1, wobei das einstellbare Schneidvorsatz-Verschleißplattensystem einen Verschleißplatten-Stellungssensor aufweist, der dazu eingerichtet ist, die Steuereinrichtung (215) mit einem Verschleißplatten-Stellungssignal (250) zu versorgen, das kennzeichnend für eine aktuelle Stellung der Schneidvorsatz-Verschleißplatte (221) ist.

## Revendications

1. Système de traitement de récolte pour un véhicule de récolte (100) configuré pour collecter du matériel de récolte, comprenant :
un tambour de tête de coupe (202) monté sur un cadre de tête de coupe (204), le tambour de tête de coupe (202) ayant un centre (205) et une périphérie (206) ;
une soufflante (128) ;
un canal de transition (212) positionné entre le tambour de tête de coupe (202) et la soufflante (128), dans lequel le tambour de tête de coupe (202) est configuré pour recevoir le matériau de récolte collecté, couper le matériau de récolte reçu et projeter le matériau dans le canal de transition (212) pour la réception par la soufflante (128) ; et
un système de plaque d'usure de tête de coupe réglable (200) comprenant un ensemble de plaque d'usure de tête de coupe (214) positionné sous le tambour de tête de coupe (202),
l'ensemble de plaque d'usure de tête de coupe (214) comprenant une plaque d'usure de tête de coupe (221) configurée pour pouvoir tourner le long de la périphérie (206) du tambour de tête de coupe (202) ;
**caractérisé par**
un dispositif de commande (215) configuré pour :
déterminer une position actuelle de la plaque d'usure de tête de coupe (221) le long de la périphérie (206) du tambour de tête de coupe (202), et
actionner une rotation de la plaque d'usure de tête de coupe (221) vers une position prédéterminée.

2. Système de traitement de récolte selon la revendication 1, dans lequel le tambour de tête de coupe (202) comprend une pluralité de lames (203) ayant une pluralité d'extrémités distales (210), et dans lequel une trajectoire de la pluralité d'extrémités distales (210) définit la périphérie (206).

3. Système de traitement de récolte selon la revendication 2, dans lequel l'ensemble de plaque d'usure de tête de coupe (214) comprend une ou plusieurs entretoises (228), l'une ou les plusieurs entretoises étant utilisées pour régler une distance (230) entre la périphérie (206) du tambour de tête de coupe (202) et la plaque d'usure de tête de coupe (221).

4. Système de traitement de récolte selon l'une quelconque des revendications 1 à 2, dans lequel l'ensemble de plaque d'usure de tête de coupe (214) comprend un cadre de plaque d'usure (216) ayant une pluralité de paliers (218), une surface de trajectoire incurvée (220) sur laquelle le cadre de plaque d'usure (216) est configuré pour rouler via la pluralité de paliers (218), et un piston de cylindre (222) monté sur le cadre de tête de coupe (204) et relié au cadre de plaque d'usure (216), dans lequel la plaque d'usure de tête de coupe (221) est positionnée de manière adjacente à la périphérie (206) du tambour de tête de coupe (202), et dans lequel le dispositif de commande (215) est configuré pour actionner le piston de cylindre (222) pour faire rouler le cadre de plaque d'usure (216) sur la surface de trajectoire incurvée (220) via la pluralité de paliers (218).

5. Système de traitement de récolte selon la revendication 4, dans lequel le dispositif de commande (215) est configuré pour actionner le piston de cylindre (222) pour faire tourner la plaque d'usure de tête de coupe (221) de l'ensemble de plaque d'usure de tête de coupe (214) autour du centre (205) du tambour de tête de coupe (202).

6. Système de traitement de récolte selon la revendication 5, dans lequel la plaque d'usure de tête de coupe (221) est positionnée à une distance radiale (232) du centre (205) du tambour de tête de coupe (202), et dans lequel la distance radiale (232) est réglable via une ou plusieurs entretoises (228) placées sous la surface de trajectoire incurvée (220) pour régler la distance (230) entre la périphérie (206) du tambour de tête de coupe (202) et la plaque d'usure de tête de coupe (221).

7. Système de traitement de récolte selon l'une quelconque des revendications précédentes, dans lequel le dispositif de commande (215) est configuré pour déterminer la position actuelle de la plaque d'usure de tête de coupe (221) le long de la périphérie (206) du tambour de tête de coupe (202) sur la base d'au moins un des éléments parmi : un signal d'angle de corps de hacheur, un signal de type de récolte, un signal de configuration de tambour, un signal de charge de moteur, un signal de pression de canal de transition, un signal d'image de canal de transition, un signal de rendement de récolte, et un capteur de position de plaque d'usure de tête de coupe.

8. Système de traitement de récolte selon la revendication 7, dans lequel le véhicule de récolte (100) comprend un logement de bobine (134) comprenant une bobine de tête (114), et dans lequel le système (200) comprend en outre un corps de traitement de récolte (110) logeant le tambour de tête de coupe (202) et un capteur d'angle de corps de hacheur (136) relié au corps de traitement de récolte (110) et couplé de manière communicative au dispositif de commande (215), le capteur d'angle de corps de hacheur (136) étant configuré pour générer le signal d'angle de corps de hacheur sur la base d'un angle formé entre une première ligne (138) fixe par rapport au corps de traitement de récolte (110) et une seconde ligne (142) le long d'une surface de sol (144) dans une direction longitudinale (146) du véhicule de récolte (100).

9. Système de traitement de récolte selon la revendication 7, comprenant en outre un dispositif d'entrée/de sortie (150) couplé de manière communicative au dispositif de commande (215), et dans lequel le dispositif d'entrée/de sortie (150) est configuré pour recevoir une entrée d'opérateur représentant un type de récolte en cours de récolte, et dans lequel le dispositif de commande (215) est configuré pour générer le signal de type de récolte sur la base au moins de l'entrée d'opérateur.

10. Système de traitement de récolte selon la revendication 7, dans lequel le signal de charge du moteur représente un couple produit par un moteur du véhicule de récolte (100).

11. Système de traitement de récolte selon la revendication 7, dans lequel le canal de transition (212) comprend une porte (236), et dans lequel le système (200) comprend en outre un ensemble de capteurs de pression hydraulique (238) monté sur le cadre de tête de coupe (204) et la porte (236), l'ensemble de capteurs de pression hydraulique (238) étant configuré pour générer le signal de pression de canal de transition sur la base de la pression sur la porte (236) provenant du matériau de récolte coupé s'écoulant à travers le canal de transition (212).

12. Système de traitement de récolte selon la revendication 7, comprenant en outre un ou plusieurs capteurs d'image (244) monté(s) sur le canal de transition (212) et couplé(s) de manière communicative au dispositif de commande (215), dans lequel le ou les capteurs d'image (244) sont configurés pour capturer une pluralité d'images du matériau de récolte coupé dans le canal de transition (212), et dans lequel le dispositif de commande (215) est en outre configuré pour exécuter un logiciel de traitement d'image pour traiter la pluralité d'images et générer le signal d'image du canal de transition.

13. Système de traitement de récolte selon la revendication 7, comprenant en outre au moins un rouleau de compression (124A) adjacent à une ouverture (246) à travers laquelle le tambour de tête de coupe (202) reçoit le matériau de récolte collecté, et dans lequel le système (200) comprend en outre un capteur de rendement de récolte (248) monté sur le rouleau de compression (124A) et couplé de manière communicative au dispositif de commande (215), le capteur de rendement de récolte (248) étant configuré pour générer le signal de rendement de récolte sur la base du déplacement vertical du rouleau de compression.

14. Système de traitement de récolte selon l'une quelconque des revendications précédentes, dans lequel la position prédéterminée a pour résultat que le matériau de récolte coupé est projeté, par le tambour de tête de coupe (202), vers une même partie du canal de transition (212).

15. Système de traitement de récolte selon la revendication 1, dans lequel le système de plaque d'usure de tête de coupe réglable (200) comprend un capteur de position de plaque d'usure configuré pour fournir au dispositif de commande (215) un signal de position de plaque d'usure (250) indiquant une position actuelle de la plaque d'usure de tête de coupe (221).
